# EUROPÄISCHE PATENTANMELDUNG

(11) **EP 2 778 564 A2**
(43) Veröffentlichungstag der Anmeldung: **17.09.2014**
(21) Anmeldenummer: 14000640.4
(22) Anmeldetag: 24.02.2014
(51) Int. Cl.: F24J 2/26, F28D 1/04, F28F 1/22

(54) **Trägerblech**

(30) Priorität: 15.03.2013 AT 2112013
(71) Anmelder: Lenz, Bernhard, 6858 Schwarzach (AT)
(72) Erfinder: Lenz, Bernhard, 6858 Schwarzach (AT); Bösch, Christian, 6890 Lustenau (AT)
(74) Vertreter: Fechner, Thomas

(57) **Zusammenfassung**

Trägerblech (1) mit zumindest zwei in das Trägerblech (1) eingeformten, rinnenförmigen und voneinander distanzierten Rohraufnahmen (2) zur formschlüssigen Aufnahme jeweils eines Rohres (20), wobei die jeweilige Rohraufnahme (2), in einem Querschnitt gesehen, zumindest zwei einander gegenüberliegende Wandabschnitte (3, 4) des Trägerblechs (1) zur Anlage am Rohr (20) aufweist, und die Wandabschnitte (3, 4) für einen Bereich eines maximalen Außendurchmessers des Rohres (20) ihren maximalen Abstand (21) voneinander aufweisen, wobei auf zumindest zwei einander gegenüberliegenden Seiten des maximalen Abstands (21) die Wandabschnitte (3, 4) jeweils einen geringeren Abstand (11, 12) als den maximalen Abstand (21) voneinander aufweisen. (Fig. 1)

## Beschreibung

Die vorliegende Erfindung betrifft ein Trägerblech mit zumindest zwei in das Trägerblech eingeformten, rinnenförmigen und voneinander distanzierten Rohraufnahmen zur formschlüssigen Aufnahme jeweils eines Rohres, wobei die jeweilige Rohraufnahme, in einem Querschnitt gesehen, zumindest zwei einander gegenüberliegende Wandabschnitte des Trägerblechs zur Anlage am Rohr aufweist, und die Wandabschnitte für einen Bereich eines maximalen Außendurchmessers des Rohres ihren maximalen Abstand voneinander aufweisen.

Für Anordnungen zur Aufnahme und Abgabe von Wärme mittels eines von einem Wärmeträger durchflossenen Rohres zu oder von einem flächig ausgebildeten Trägerblech gibt es vielfältige Anwendungsmöglichkeiten.

In der thermischen Solartechnik werden solche Anordnungen insbesondere beim Bau von Solarkollektoren eingesetzt. Die Solarstrahlung wird, wie an sich bekannt, durch sogenannte Absorberplatten absorbiert. Diese sind in der Regel zur Sonnenseite hin beschichtet und an der der Sonnenseite abgewandten Seite mit von einem Wärmeträgermedium durchflossenen Rohren zur Wärmeabfuhr verbunden. Aus offenkundiger Vorbenutzung sind Anordnungen bekannt, bei denen die Rohre direkt mittels Löten oder Schweißen mit der absorbierenden Platte verbunden sind. Nachteilig an solchen Anordnungen ist es, dass es aufgrund von thermischen Ausdehnungen zu großen mechanischen Spannungen in der Verbindung zwischen dem Rohr und dem Absorberplatte kommen kann, die unter Umständen zu einem Lösen der Verbindung führen können. Auch ist die Wärmeübertragungsfläche aufgrund der linienförmigen Ausbildung der Schweiß- oder Lötnaht begrenzt.

Neben thermischen Sonnenkollektoren sind auch sogenannte Hybridkollektoren im Stand der Technik bekannt. Dabei werden an sich bekannte Photovoltaikmodule, zur Gewinnung von elektrischer Energie durch Umwandlung von Solarstrahlung, durch den Kontakt mit einem von einem Wärmeträgermedium durchflossenen Rohr, gekühlt. Da herkömmliche Photovoltaikzellen bei erhöhten Temperaturen einen Wirkungsgradverlust haben, kann diese Anordnung zur Steigerung der Effizienz verwendet werden. Es entsteht ein Doppelnutzen, da neben elektrischer Energie auch thermische Energie gewonnen werden kann.

Aus der EP 1 524 476 A2 und der EP 2 116 793 A2 sind Lösungen bekannt, bei denen ein Strangpressprofil bzw. ein eine rinnenförmige Vertiefung aufweisendes Wärmeleitblech als Rohrbefestigung verwendet und mit der Absorberplatte verbunden werden. Dabei wird eine flächige Verbindung zwischen der Rohrbefestigung und der Absorberplatte hergestellt. Zusätzlich erfolgt ein Umformvorgang, bei dem das Rohr so verformt wird, dass der thermische Kontakt weiter verbessert werden kann. Diese Konstruktionen sind in der Herstellung relativ aufwändig, da mehrere Strangpressprofile bzw. Wärmeleitbleche mit der Absorberplatte verbunden werden müssen und der nachfolgende Umformvorgang des Rohres nötig ist.

Aus der DE 101 42 752 A1 ist ein gattungsgemäßes Trägerblech bekannt. Dieses weist mehrere rinnenförmige Vertiefungen auf, wobei das einzubringende Rohr in Bezug auf die halbkreisfömigen Vertiefungen ein Übermaß aufweist. Dadurch kommt es beim Einbringen des Rohres zu einer Verformung des Trägerblechs im Bereich der Rohraufnahme. Das Rohr wird lediglich über die entstehenden Reibkräfte in Position gehalten. Die Gesamtkonstruktion wird an der Absorberplatte durch geeignete, an sich bekannte Fügeverfahren wie Schweißen, Kleben, Löten, Durchsetzfügen etc. fixiert. Auch hier ist, insbesondere bei unterschiedlichen verwendeten Materialien, mit unterschiedlichen Wärmeausdehnungen und daraus resultierenden mechanischen Spannungen zu rechnen. Insbesondere nachteilig ist die Aufsummierung der entstehenden Wärmeausdehnungen über die Gesamtlänge des Trägerblechs.

Aufgabe der Erfindung ist es, eine verbesserte Ausführung eines Trägerblechs der eingangs genannten Art bereitzustellen, welches einfach aufgebaut ist und eine gute Wärmeübertragung bereitstellt.

Die Erfindung löst diese Aufgabe durch ein Trägerblech der oben genannten Art, bei dem vorgesehen ist, dass auf zumindest zwei einander gegenüberliegenden Seiten des maximalen Abstands die Wandabschnitte jeweils einen geringeren Abstand als den maximalen Abstand voneinander aufweisen.

Es ist somit mit anderen Worten vorgesehen, dass die aus der Umformung des Trägerblechs entstandenen Wandabschnitte beidseits des größten Durchmessers des Rohres an diesem anliegen. Hiermit ist eine einfache aber trotzdem eine gute Wärmeübertragung sicherstellende Verbindungsmöglichkeit zwischen Rohr und Trägerblech geschaffen.

Es ist in diesem Zusammenhang vorzugsweise vorgesehen, dass alle drei Abstände parallel zueinander gemessen werden. Besonders bevorzugt ist es, wenn die Abstände parallel zur Ebene der die Rohraufnahme umgebenden Bereiche des Trägerblechs gemessen werden.

Beim Material des Trägerblechs handelt es sich vorzugsweise um ein Blech aus Metall mit guter Wärmeleitfähigkeit, z. B. Aluminium oder Kupfer. Besonders bevorzugt besteht das Trägerblech aus Aluminium, bzw. einer Aluminiumlegierung.

Vorzugsweise ist vorgehen, dass die Wandabschnitte der jeweiligen Rohraufnahme symmetrisch, vorzugsweise achsensymmetrisch, zueinander angeordnet sind.

Bevorzugte Ausgestaltungsformen des Trägerblechs sehen vor, dass zumindest einer der Wandabschnitte, in einem Querschnitt gesehen, Teil einer Schleife ist, wobei die Schleife zwei durch einen umgebogenen Bereich miteinander verbundene Schenkel aufweist, und einer der beiden Schenkel der Wandabschnitt ist. In anderen Worten ist somit günstigerweise vorgesehen, dass das Rohr im Sinne einer federnden Aufhängung mit der Schleife oder in den Schleifen in der Rohraufnahme gehalten ist. Durch die Schleife bzw. die Schleifen kann die bei einer Erwärmung oder Abkühlung des Trägerblechs, bzw. der umliegenden Konstruktion, thermisch bedingte Ausdehnung oder das Zusammenziehen der Konstruktion durch die elastische Verformung der Schleifen kompensiert werden kann. Damit wird eine Einbringung einer thermisch erzeugten Spannung in das Rohr bzw. in die Verbindung zwischen dem Rohr und dem Trägerblech verhindert bzw. zumindest deutlich verringert. Insbesondere bei Trägerblechen, die eine Vielzahl von Rohraufnahmen aufweisen, können die auftretenden thermisch bedingten Längenänderungen mit einer solchen Schleifenanordnung lokal kompensiert werden, ohne hohe mechanische Spannungen zu generieren, die sich ansonsten über die gesamte Länge des Trägerblechs aufsummieren würden. Die Schleife könnte auch als Schlaufe bezeichnet werden. Sie hat zumindest zwei Schenkel, die mittels des umgebogenen Bereichs miteinander verbunden sind.

In einer bevorzugten Ausgestaltungsform ist vorgesehen, dass der umgebogene Bereich der Schleifen einen Winkel von größer 180° aufweist. Bei einer solchen erfindungsgemäßen Anordnung ist des Weiteren bevorzugt vorgesehen, dass die Schenkel der Schleife voneinander beabstandet sind. Dadurch wird gewährleistet, dass sich die Schleifenkonstruktion ausreichend verformen kann, um die thermisch bedingte Ausdehnung oder das thermisch bedingte Zusammenziehen des Trägerblechs bzw. des Rohres lokal zu kompensieren.

Der Querschnitt der Wandabschnitte der jeweiligen Rohraufnahme kann je nach einzubringendem Rohrquerschnitt unterschiedlich sein. Es kann sich um rechteckige, vieleckige, ovale oder andere Querschnitte handeln. Günstigerweise ist vorgesehen, dass die Wandabschnitte der jeweiligen Rohraufnahme zumindest bereichsweise einen kreisförmigen Querschnitt aufweisen und sich gemeinsam, vorzugsweise ohne Unterbrechung, um mehr als 180° in Umfangsrichtung des kreisförmigen Querschnitts zur Anlage am Rohr erstrecken. Es ist damit dann sichergestellt, dass ein in das Trägerblech einbringbares Rohr mit kreisförmigem Querschnitt in über weite Bereiche seines Umfangs in Richtung normal zur Längserstreckung des Rohres formschlüssig gehalten werden kann. Im Sinne eines guten Wärmeübergangs zwischen dem Trägerblech und dem einzubringenden Rohr ist bevorzugt vorgesehen, dass das Rohr mit seiner Mantelfläche vollflächig an den Wandabschnitten der jeweiligen Rohraufnahme anliegt. Dies stellt im Vergleich zu linienförmigen Anordnungen gelöteter oder geschweißter Rohre auf einem Blech eine wesentliche Verbesserung dar. Es ist dabei sogar denkbar und möglich, dass sich die Wandabschnitte um bis zu 360° in Umfangsrichtung des kreisförmigen Querschnitts zur Anlage am Rohr erstrecken. Dadurch ist es möglich, die Kontaktfläche zwischen dem Rohr und der Rohraufnahme zu maximieren.

Als Querschnitt wird in diesem Zusammenhang eine Schnittfläche bezeichnet, die normal zur Längserstreckung der Rohraufnahme liegt.

Bevorzugte Ausgestaltungsformen der Erfindung sehen vor, dass sich zwischen den Wandabschnitten der Rohraufnahme, vorzugsweise auf einer von den die Rohraufnahme umgebenden Bereichen des Trägerblechs abgewandten Seite, eine Öffnung zur Einbringung des Rohres in die Rohraufnahme befindet.

Neben dem Trägerblech an sich, sieht die Erfindung auch eine Anordnung mit einem erfindungsgemäßen Trägerblech und zumindest einem Rohr vor, wobei das Rohr in zumindest einer der Rohraufnahmen des Trägerblechs von den Wandabschnitten formschlüssig gehalten ist.

Generell ist zu bemerken, dass es sich beim Rohr in der Rohraufnahme um ein einzelnes Rohr oder um einen Rohrabschnitt handeln kann. Es ist in diesem Zusammenhang denkbar und möglich, dass ein einziges Rohr in einer jeweiligen Rohraufnahme des Trägerblechs formschlüssig gehalten ist, und diese über ein Sammelrohr miteinander parallel, im Sinne eines Registers bzw. einer Harfe, miteinander verbunden sind. Bevorzugte Ausgestaltungsformen der Anordnung sehen vor, dass das zumindest eine, vorzugsweise mäanderförmig geformte, Rohr in zumindest zwei der Rohraufnahmen des Trägerblechs von den jeweiligen Wandabschnitten formschlüssig gehalten ist. Besonders bevorzugte Ausgestaltungsformen sehen vor, dass ein einziges mäanderförmig geformtes Rohr in allen Rohraufnahmen des Trägerblechs von den jeweiligen Wandabschnitten formschlüssig gehalten ist. Beim Rohr handelt es sich um ein metallisches Rohr, vorzugsweise besteht das Rohr aus Kupfer bzw. einer Kupferlegierung. Auch der Einsatz anderer geeigneter Materialien ist möglich.

Allgemein ist zu erwähnen, dass die Rohraufnahmen des Trägerblechs in der Regel parallel zueinander ausgerichtet sind. Es ist allerdings auch denkbar, dass die Rohraufnahmen in einem beliebigen Winkel zueinander im Trägerblech positioniert werden.

Bevorzugte Ausführungsformen der erfindungsgemäßen Anordnung sehen vor, dass die Anordnung eine Rückwand aufweist, und das Trägerblech im Bereich der zumindest zwei Rohraufnahmen, vorzugsweise an den vom umgebenden Bereich des Trägerblechs abstehenden Enden der Rohraufnahme, mit der Rückwand verklebt oder anderweitig, vorzugsweise materialschlüssig, verbunden ist. Dabei ist vorteilhafterweise vorgesehen, dass es sich bei den abstehenden Enden der Rohraufnahme um den Umbiegebereich der Schleifen handelt. Besonders bevorzugt ist es, wenn der Kleber im Bereich der Öffnung zwischen den Wandabschnitten bzw. Schleifen eingebracht wird und das Trägerblech über diese Klebestellen mit der Rückwand verklebt ist. Beim Klebstoff kann es sich um in diesem Zusammenhang an sich bekannte und handelsübliche Klebstoffe handeln. Diese Anordnung eignet sich insbesondere zum Nachrüsten von Photovoltaikmodulen, um deren Wirkungsgrad durch Kühlung zu verbessern. Aber auch eine Erstausrüstung von Hybridmodulen oder thermischen Solarkollektoren ist denkbar und möglich. Bevorzugt ist vorgesehen, dass der Kontakt zwischen dem Photovoltaikmodul bzw. einer Absorberplatte und dem Trägerblech durch eine Wärmeleitschicht, vorzugsweise eine Schicht Gel und/oder eine Schicht Paste und/oder einen eingelegten Elastomerkörper bzw. eine Elastomermatte gebildet wird, die sich zwischen dem Trägerblech und dem Photovoltaikmodul bzw. der Absorberplatte befindet. Es ist aber auch denkbar und möglich, auf eine oben beschriebene Wärmeleitschicht zu verzichten und das Trägerblech direkt auf dem Photovoltaikmodul bzw. der Absorberplatte anliegen zu lassen. Die erfindungsgemäße Anordnung kann durch eine geeignete, an sich bekannte Klemmvorrichtung insbesondere zur Nachrüstung von Photovoltaikmodulen verwendet werden. Dabei ist es auch denkbar und möglich, dass die Anordnung vorzugsweise ausschließlich klemmend am Photovoltaikmodul befestigt ist, um die strukturelle Integrität des Photovoltaikmoduls nicht zu beeinflussen.

Die Erfindung sieht ferner ein Verfahren zur Herstellung einer erfindungsgemäßen Anordnung mit einem Trägerblech und zumindest einem Rohr vor, wobei in einem ersten Umformvorgang zur Herstellung der zumindest zwei eingeformten, rinnenförmigen und voneinander distanzierten Rohraufnahmen, Teile der jeweiligen zumindest zwei einander gegenüberliegenden Wandabschnitte in das Trägerblech mittels Umformung des Trägerblechs eingeformt werden, in weiterer Folge das jeweilige Rohr zwischen diese Teile der Wandabschnitte eingebracht wird, und in einem zweiten Umformvorgang das Trägerblech zur Fertigstellung der Wandabschnitte weiter verformt wird, wobei die Wandabschnitte am Ende des zweiten Umformvorgangs für den Bereich des maximalen Außendurchmessers des Rohres, ihren maximalen Abstand voneinander aufweisen, wobei auf zumindest den zwei einander gegenüberliegenden Seiten des maximalen Abstands die Wandabschnitte jeweils den geringeren Abstand als den maximalen Abstand voneinander aufweisen.

Es ist somit in anderen Worten vorgesehen, dass Teile der Wandabschnitte in einem ersten Umformprozess in das Trägerblech eingeformt werden. Die Breite der Öffnung ist nach dem ersten Umformprozess vorzugsweise so groß, dass das Rohr in die soweit ausgestaltete Rohraufnahme eingebracht werden kann. Beim anschließenden zweiten Umformvorgang werden die Wandabschnitte so weiter verformt, dass das Rohr formschlüssig zwischen ihnen gehalten ist.

Neben der Anwendung bei Einrichtungen zur Absorption und/oder Umwandlung von Solarstrahlung zur Gewinnung von Wärme und/oder elektrischem Strom, ist es auch möglich, die Anordnung zur Wärmeabgabe, beispielsweise als Flächenheizung, oder auch zur Wärmeaufnahme zu verwenden. Insbesondere eine Anwendung als Wandheizung oder Fußbodenheizung ist denkbar.

Weitere Merkmale und Einzelheiten der Erfindung werden nachfolgend anhand eines Ausführungsbeispiels geschildert. Dabei zeigen:
- Fig. 1: ein Querschnitt einer erfindungsgemäßen Anordnung;
- Fig. 2: den Bereich B aus Fig. 1, vergrößert;
- Fig. 3: das Trägerblech vor der Durchführung des ersten Umformvorganges gemäß des erfindungsgemäßen Verfahrens zur Herstellung einer erfindungsgemäßen Anordnung;
- Fig. 4: das nach dem ersten Umformvorgang verformte Trägerblech mit eingelegtem Rohr gemäß des erfindungsgemäßen Verfahrens;
- Fig. 5: die Anordnung vor der Durchführung des zweiten Umformvorganges gemäß des erfindungsgemäßen Verfahrens;
- Fig. 6: eine erfindungsgemäße Anordnung nach dem zweiten Umformvorgang;
- Fig. 7: eine erfindungsgemäße Anordnung mit Rückwand und Photovoltaikmodul bzw. Absorberplatte;
- Fig. 8: den Grundriss einer erfindungsgemäßen Anordnung eines Trägerblechs mit einem mäanderförmig eingebrachten Rohr und
- Fig. 9: einen Schnitt durch die erfindungsgemäße Anordnung gemäß Fig. 8 entlang der Schnittlinie A-A.

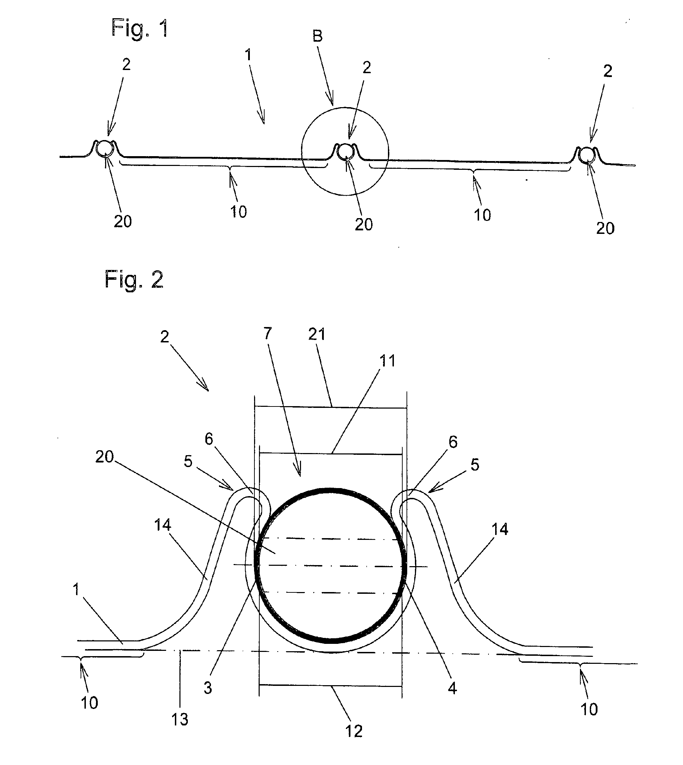

In Fig. 1 ist ein Schnitt durch eine erfindungsgemäße Anordnung dargestellt. Zu sehen ist ein erfindungsgemäßes Trägerblech 1 mit drei eingeformten, rinnenförmigen und voneinander distanzierten Rohraufnahmen 2 zur formschlüssigen Aufnahme jeweils eines Rohres 20. Zwischen den Rohraufnahmen 2 befindet sich jeweils ein umgebender Bereich 10 des Trägerblechs 1. Die umgebenden Bereiche 10 sind bevorzugt eben ausgeführt. Wie bereits erwähnt handelt es sich beim Material des Trägerblechs bevorzugt um Metall, vorzugsweise Kupfer, Aluminium oder Aluminiumlegierungen. Auch andere Metalle mit entsprechender Wärmleitfähigkeit können verwendet werden. In diesem Ausführungsbeispiel handelt es sich um ein Rohr 20 mit kreisförmigem Querschnitt. Der Querschnitt des Rohres könnte aber auch anders sein, z. B. rechteckig, in Form eines Vieleckes, oval oder eine beliebige Freiform aufweisen. Als Querschnitt wird in diesem Zusammenhang jene Schnittfläche bezeichnet, die normal zur Längserstreckung der Rohraufnahme angeordnet ist.

Die Fig. 2 zeigt den vergrößerten Bereich B der Fig. 1. Hier ist die formschlüssige Aufnahme eines Rohres 20 in der Rohraufnahme 2 gut ersichtlich. Es ist außerdem gut zu erkennen, dass die jeweilige Rohraufnahme 2 in einem Querschnitt normal zur Längserstreckung der Rohraufnahme 2, zwei einander gegenüberliegende Wandabschnitte 3, 4 des Trägerblechs 1 zur Anlage am Rohr 20 aufweist. Die Wandabschnitte 3 bzw. 4 sind jeweils Teil einer Schleife 5, wobei die Schleife 5 zwei durch einen umgebogenen Bereich 6 verbundene Schenkel 3, 4, 14 aufweist, und einer der beiden Schenkel 3, 4, 14 der Wandabschnitt 3 bzw. 4 ist. Zwischen den beiden Wandabschnitten 3 und 4 der Rohraufnahme 2, befindet sich eine Öffnung 7. Das Rohr 20 ist vom erfindungsgemäßen Trägerblech 1 über große Teile seines Umfangs in Richtung orthogonal zur Längserstreckung der Rohraufnahme 2 in dieser formschlüssig gehalten.

Erfindungsgemäß ist nun vorgesehen, dass die Wandabschnitte 3, 4 für einen Bereich eines maximalen Außendurchmessers des Rohres 20 ihren maximalen Abstand 21 voneinander aufweisen und auf zwei einander gegenüberliegenden Seiten des maximalen Abstands 21 die Wandabschnitte 3, 4 jeweils einen geringeren Abstand 11, 12 als den maximalen Abstand 21 voneinander aufweisen. Dies ist anhand der in Fig. 2 eingezeichneten Abstände 11 und 12, die zwischen den Wandabschnitten 3, 4 gemessen werden und die sich auf zwei einander gegenüberliegenden Seiten des maximalen Abstands 21 der Wandabschnitte befinden, gut ersichtlich. Die genannten Abstände werden vorzugsweise parallel zueinander gemessen. Bei diesem Ausführungsbeispiel ist auch insbesondere ersichtlich, dass die genannten Abstände 11, 12, 21 besonders bevorzugt parallel zur Bezugsebene 13 der die Rohraufnahmen 2 umgebenden Bereiche 10 des Trägerblechs 1 gemessen werden. Es ist aber auch denkbar und möglich, dass die Bezugsebene 13 von den umgebenden Bereichen 10 des Trägerblechs 1 abweicht.

In Fig. 2 ist außerdem sehr gut ersichtlich, dass die Wandabschnitte 3 und 4 der Rohraufnahme 2 in diesem Ausführungsbeispiel symmetrisch, hier achsensymmetrisch zueinander angeordnet sind. Wie bereits erwähnt, handelt es sich beim Querschnitt des hier eingebrachten Rohres 20 um einen kreisförmigen Querschnitt. Auch die Wandabschnitte 3, 4 der Rohraufnahme 2 weisen zumindest bereichsweise in diesem Ausführungsbeispiel einen kreisförmigen Querschnitt auf und erstrecken sich gemeinsam, vorzugsweise ohne Unterbrechung, um mehr als 180° in Umfangsrichtung des kreisförmigen Querschnitts zur Anlage am Rohr. Damit wird eine große Kontaktfläche zur Wärmeübertragung vom Trägerblech 1 auf das Rohr 20 und umgekehrt erreicht. Es ist denkbar und möglich, die Anlage am Rohr auf bis zu 360° in Umfangsrichtung des kreisförmigen Querschnitts zu erhöhen.

Ebenfalls gut ersichtlich ist die Form der Schleifen 6 bzw. Schlaufen, die so geformt sind, dass die bei einer Erwärmung oder Abkühlung des Trägerblechs 1 bzw. der umliegenden Konstruktion entstehende Längenänderung durch die elastische Verformung der Schleifen 6 kompensiert werden kann. Damit wird eine Einbringung von thermischen Spannungen in das Rohr 20 bzw. in die Verbindung zwischen dem Rohr 20 und dem Trägerblech 1 vermindert. Um die Möglichkeit der Verformung zu erhöhen, weisen die Schenkel der Schleifen 6 einen Abstand zueinander auf.

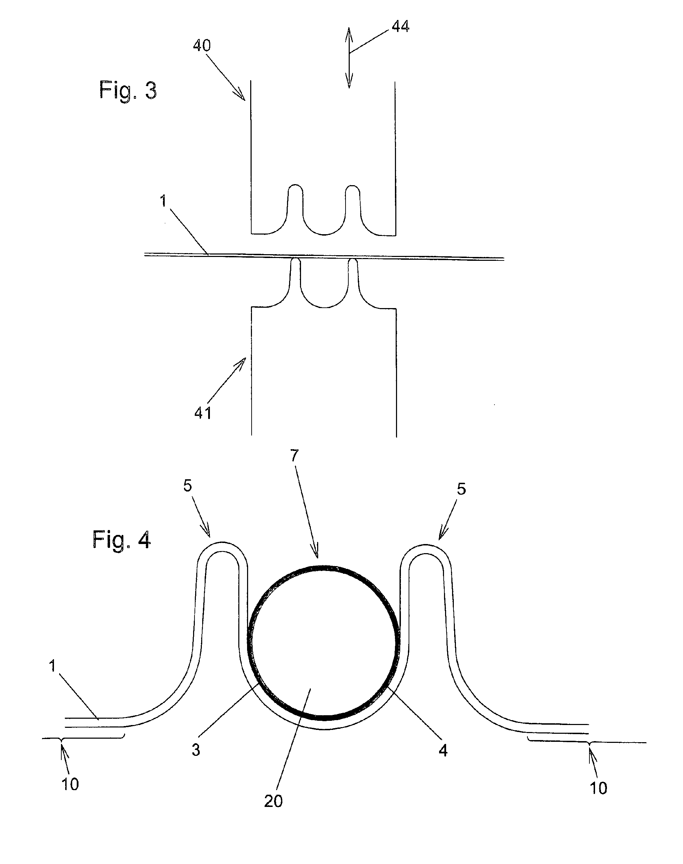

Die Fig. 3 bis 6 zeigen nun die Verfahrensschritte zur Herstellung einer Anordnung gemäß Fig. 2. In Fig. 3 ist die Ausgangsstellung des ersten Umformvorganges dargestellt. Das zu verformende Trägerblech 1 befindet sich zwischen dem verfahrbaren Stempel 40 und der Matrize 41. Der Stempel 40 bzw. die Matrize 41 besitzen die entsprechende Kontur zur Herstellung einer rinnenförmigen Vertiefung. Die Bewegungsrichtung 44 stellt die Bewegungsrichtung des Stempels dar, und liegt im Wesentlichen orthogonal zum Trägerblech 1. Wird nun der Stempel 40 in Bewegungsrichtung 44 zur Matrize bewegt, so erfolgt der erste Umformvorgang zur Herstellung der eingeformten, rinnenförmigen und voneinander distanzierten Rohraufnahmen 2. Dabei werden Teile der jeweiligen zumindest zwei einander gegenüberliegenden Wandabschnitte 3, 4 der Rohraufnahme 2 in das Trägerblech 1 eingeformt.

In Fig. 4 ist das Trägerblech 1 nach dem ersten Umformvorgang, ohne die Umformwerkzeuge gezeigt. Die beiden Schenkel der Schleifen 5 stehen in diesem Ausführungsbeispiel nach dem ersten Umformvorgang im Wesentlichen lotrecht auf den umgebenden Bereichen 10 des Trägerblechs 1. Dies ist natürlich nicht zwingend erforderlich. In Fig. 4 ist das Rohr 20 bereits in die Rohraufnahme 2 eingebracht. Die Breite der Öffnung 7 ist nach dem ersten Umformprozess vorzugsweise so groß, dass das Rohr 20 durch die Öffnung 7 in die Rohraufnahme 2 eingebracht werden kann. Es ist auch denkbar, das Rohr 20 in Längserstreckung der Rohraufnahme in die soweit ausgeformte rinnenförmige Vertiefung einzuführen.

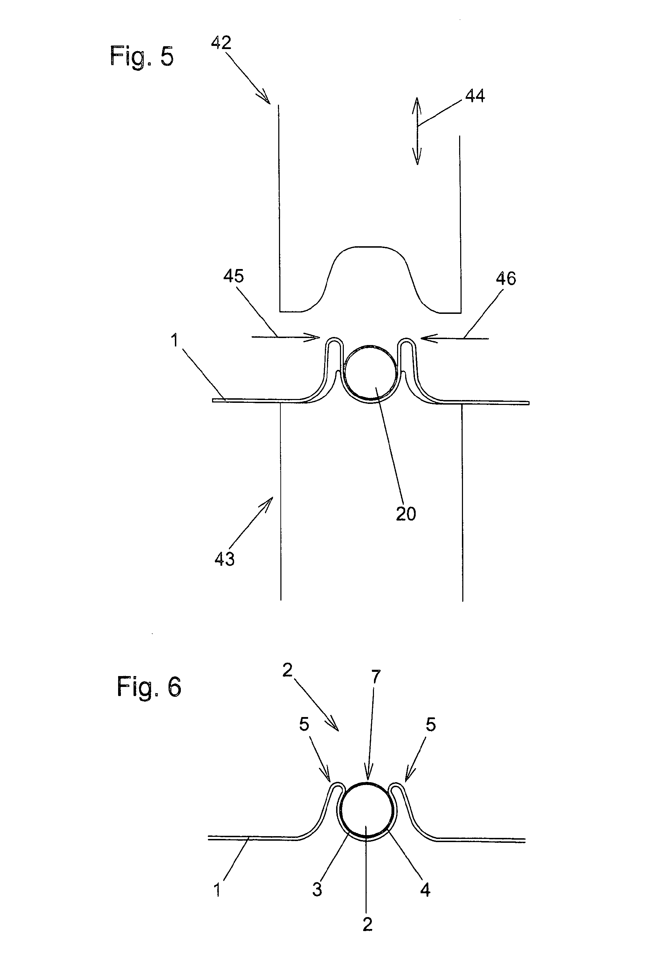

Nun erfolgt, gemäß dem erfindungsgemäßen Verfahren, der zweite Umformvorgang, wie in Fig. 5 dargestellt. Das Trägerblech 1 mit dem eingebrachten Rohr 20 wird in die Matrize 43 eingelegt. Der Stempel 42 bewegt sich in Bewegungsrichtung 44. Die Pfeile 45 und 46 zeigen beispielhaft die nun folgende Umformrichtung der Schleifen der Rohraufnahme 20. Es ist nun also vorgesehen, dass in einem zweiten Umformvorgang die Wandabschnitte 3, 4 des Trägerblechs 1 weiter verformt werden, wobei die Wandabschnitte 3, 4 am Ende des zweiten Umformvorganges für den Bereich des maximalen Außendurchmessers des Rohres 20 ihren maximalen Abstand 21 voneinander aufweisen, und auf zumindest zwei einander gegenüberliegenden Seiten des maximalen Abstands 21 die Wandabschnitte 3, 4 jeweils einen geringeren Abstand 11, 12 als den maximalen Abstand 21 voneinander aufweisen. Wird nun, in anderen Worten, der Stempel 42 in Bewegungsrichtung 44 zur Matrize 43 bewegt, so werden die Schleifen durch den Kontakt mit dem Stempel 42 in Umformrichtung 45 bzw. 46 umgeformt. Die Lage dieser Umformrichtungen 45 und 46 ist von der Geometrie des Stempels 42 abhängig und hier nur beispielhaft eingezeichnet.

Wie in Fig. 6 ersichtlich, erstrecken sich nach dem zweiten Umformvorgang die Wandabschnitte 3, 4 der Rohraufnahme 2 in diesem Ausführungsbeispiel gemeinsam und ohne Unterbrechung um mehr als 180° in Umfangsrichtung des kreisförmigen Querschnitts zur Anlage am Rohr 20. Das Rohr 20 ist somit über weite Bereiche seines Umfangs normal zur Längserstreckung der Rohraufnahme 2 formschlüssig gehalten. Es versteht sich von selbst, dass dieser Vorgang für sämtliche in ein Trägerblech 1 einzuformende Rohraufnahmen 2 wiederholt werden kann.

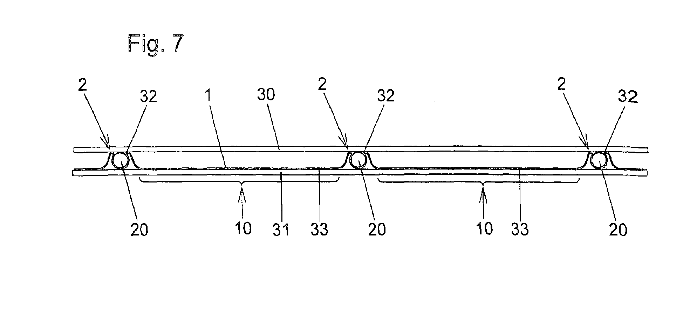

Fig. 7 zeigt nun einen beispielhaften Aufbau in einem Solarkollektor. Die dargestellte Anordnung besteht aus einer Absorberplatte 31, dem Trägerblech 1 mit darin formschlüssig in den Rohraufnahnmen 2 eingebrachten Rohren 20 und einer Rückwand 30. Bei der Absorberplatte 31 handelt es sich um an und für sich bekannte Platten oder Bleche, die über eine geeignete Absorberschicht zur Absorption von Solarstrahlung verfügen. Diese Schicht befindet sich auf der Außenseite des Solarkollektors. Auf der gegenüberliegenden Seite der Absorberplatte 31 liegt das Trägerblech 1 auf der Absorberplatte 31 auf. Es ist im Sinne einer guten Wärmeübertragung günstig, eine möglichst vollflächige Anlage der Absorberplatte 31 am Trägerblech 1 anzustreben. Zwischen Trägerblech 1 und Absorberplatte 31 ist in diesem Ausführungsbeispiel eine Wärmeleitschicht 33 eingebracht. Dabei handelt es sich um eine flexible oder gleitfähige Verbindung mittels einer an sich bekannten Wärmeleitpaste. Auch andere Ausführungen sind, wie erläutert, denkbar. Die Wärmeleitschicht stellt einen guten thermischen Kontakt zwischen der Absorberplatte 31 und dem Trägerblech 1 sicher, ermöglicht aber auch eine Relativbewegung zwischen Absorberplatte 31 und Trägerblech 1. Bei diesem Ausführungsbeispiel ist vorgesehen, dass das Trägerblech 1 im Bereich der Rohraufnahmen 2 an den vom umgebenden Bereich 10 abstehenden Enden der Rohraufnahmen 2 mit der Rückwand 30 verklebt ist. Der Klebstoff 32 wurde im Bereich der Öffnung 7 der Rohraufnahme 2 eingebracht und stellt den Kontakt zwischen dem Trägerblech 1 und der Rückwand 30 sicher. Die abstehenden Enden der Rohraufnahmen 2 sind im Ausführungsbeispiel durch die umgebogenen Bereiche 6 der Schleifen 5 repräsentiert.

Im Falle der Nachrüstung einer Kühlung für Photovoltaikmodule, stellt die in Figur 7 gezeigte Absorberplatte 31 die Rückseite des Photovoltaikelements dar. Es ist auch denkbar und möglich, die Absorberplatte 31 mit dem Trägerblech 1 fix zu verbinden, beispielsweise durch Schweißen, Löten, Klebung, Durchsetzfügen oder andere an sich bekannte Fügeverfahren.

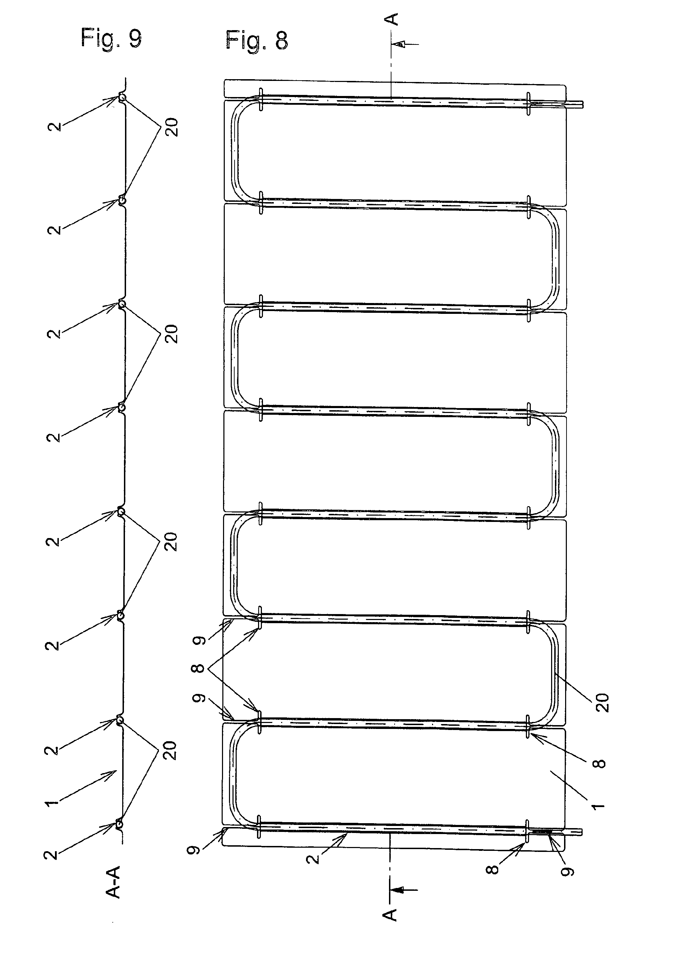

Fig. 8 zeigt einen Grundriss auf eine erfindungsgemäße Anordnung. Es ist besonders gut zu erkennen, dass hier das Rohr 20 mäanderförmig geformt ist und in sämtlichen Rohraufnahmen 2 des Trägerblechs 1 formschlüssig gehalten ist. Fig. 9 zeigt eine Schnittansicht entlang der Schnittlinie A-A der Fig. 8. Bei diesem Ausführungsbeispiel gemäß Fig. 8 und 9 sind die Bogen des mäanderförmigen Rohres 20 innerhalb der Außenkontur des Trägerblechs 1 angeordnet. Dazu werden vor dem ersten Umformvorgang zur Herstellung der Rohraufnahmen 2, die Ausnehmungen 8 und die Schlitze 9 im Trägerblech 1 eingebracht. Dadurch ist es möglich, eine Konstruktion zu erreichen, bei der das mäanderförmig geformte Rohr 20 innerhalb der Außenkontur des Trägerblechs 1 verbleibt. Es ist natürlich denkbar und möglich, auf die Ausnehmung 8 bzw. den Schlitz 9 zu verzichten, und die bogenförmigen Rohrabschnitte des mäanderförmig geformten Rohres 20 über die Außenkontur des Trägerblechs hervorstehen zu lassen. Die Ausnehmung 8 bzw. der Schlitz 9 können durch an sich bekannte Fertigungsverfahren, z. B. Stanzen etc. in das Trägerblech 1 eingebracht werden.

In diesem Ausführungsbeispiel ist in Fig. 8 auch gut ersichtlich, dass die Rohraufnahmen 2 in ihrer Längserstreckung parallel und mit gleichem Abstand zueinander angeordnet sind. Es ist denkbar und möglich, die Rohraufnahmen 2 abweichend von einer parallelen Ausrichtung unter beliebigem Winkel und in unterschiedlichen Abständen zueinander anzuordnen. Insbesondere bei Trägerblechen 1 wie in Fig. 8 dargestellt, die eine Vielzahl von Rohraufnahmen 2 aufweisen, können die auftretenden thermisch bedingten Ausdehnungen und Zusammenziehungen mit der erwähnten Schleifenanordnung lokal kompensiert werden. Dadurch werden hohe mechanische Spannungen vermieden, die sich ansonsten über die gesamte Länge des Trägerblechs 1 aufsummieren würden.

Der Vollständigkeit halber sei darauf hingewiesen, dass es sich beim Trägerblech 1 nicht zwingendermaßen um ein rechteckiges Blech handeln muss. Vielmehr sind andere Ausführungsformen als Kreissektoren, Vielecke etc. denkbar.

Neben der Anwendung im Solarkollektorbau ist es auch möglich, diese Anordnung anderweitig zur Abgabe oder Aufnahme von Wärme zu verwenden. Insbesondere ist die Realisierung von Wandheizungen etc. durch die erfindungsgemäße Anordnung einfach möglich. Neben der Ausführung mit einem mäanderförmig geformten Rohr 20 ist es auch möglich, eine Reihe von Rohrabschnitten 20 mittels eines Sammelrohrs zu einer sogenannten Harfe bzw. Register zu verbinden und damit die Wärmeabfuhr oder-zufuhr zu bewerkstelligen.

### Legende

### zu den Hinweisziffern:

- 1: Trägerblech
- 2: Rohraufnahme
- 3: Wandabschnitt
- 4: Wandabschnitt
- 5: Schleife
- 6: umgebogener Bereich
- 7: Öffnung
- 8: Ausnehmung
- 9: Schlitz
- 10: umgebender Bereich
- 11: Abstand zwischen Wandabschnitten
- 12: Abstand zwischen Wandabschnitten
- 13: Bezugsebene
- 14: Schenkel
- 20: Rohr
- 21: maximaler Abstand
- 30: Rückwand
- 31: Absorberplatte
- 32: Klebstoff
- 33: Wärmeleitschicht
- 40: Stempel
- 41: Matrize
- 42: Stempel
- 43: Matrize
- 44: Bewegungsrichtung
- 45: Umformrichtung
- 46: Umformrichtung

## Patentansprüche

1. Trägerblech (1) mit zumindest zwei in das Trägerblech (1) eingeformten, rinnenförmigen und voneinander distanzierten Rohraufnahmen (2) zur formschlüssigen Aufnahme jeweils eines Rohres (20), wobei die jeweilige Rohraufnahme (2), in einem Querschnitt gesehen, zumindest zwei einander gegenüberliegende Wandabschnitte (3, 4) des Trägerblechs (1) zur Anlage am Rohr (20) aufweist, und die Wandabschnitte (3, 4) für einen Bereich eines maximalen Außendurchmessers des Rohres (20) ihren maximalen Abstand (21) voneinander aufweisen, **dadurch gekennzeichnet, dass** auf zumindest zwei einander gegenüberliegenden Seiten des maximalen Abstands (21) die Wandabschnitte (3, 4) jeweils einen geringeren Abstand (11, 12) als den maximalen Abstand (21) voneinander aufweisen.

2. Trägerblech (1) nach Anspruch 1, **dadurch gekennzeichnet, dass** die Wandabschnitte (3, 4) der jeweiligen Rohraufnahme (2) symmetrisch, vorzugsweise achsensymmetrisch, zueinander angeordnet sind.

3. Trägerblech (1) nach Anspruch 1 oder 2, **dadurch gekennzeichnet, dass** zumindest einer der Wandabschnitte (3, 4), in dem Querschnitt gesehen, Teil einer Schleife (5) ist, wobei die Schleife (5) zwei durch einen umgebogenen Bereich (6) miteinander verbundene Schenkel (3, 4, 14) aufweist, und einer der beiden Schenkel der Wandabschnitt (3, 4) ist.

4. Trägerblech (1) nach Anspruch 3, **dadurch gekennzeichnet, dass** die Schenkel (3, 4, 14) der Schleife (5) voneinander beabstandet sind.

5. Trägerblech (1) nach einem der Ansprüche 1 bis 4, **dadurch gekennzeichnet, dass** die Wandabschnitte (3, 4) der jeweiligen Rohraufnahme (2) zumindest bereichsweise einen kreisförmigen Querschnitt aufweisen und sich gemeinsam, vorzugsweise ohne Unterbrechung, um mehr als 180° in Umfangsrichtung des kreisförmigen Querschnitts zur Anlage am Rohr (20) erstrecken.

6. Trägerblech (1) nach einem der Ansprüche 1 bis 5, **dadurch gekennzeichnet, dass** sich zwischen den Wandabschnitten (3, 4) der Rohraufnahme (2), vorzugsweise auf einer von den die Rohraufnahme (2) umgebenden Bereichen (10) des Trägerblechs (1) abgewandten Seite, eine Öffnung (7) zur Einbringung des Rohres (20) in die Rohraufnahme (2) befindet.

7. Anordnung mit einem Trägerblech (1) nach einem der Ansprüche 1 bis 6, **dadurch gekennzeichnet, dass** die Anordnung zumindest ein Rohr (20) aufweist, wobei das Rohr (20) in zumindest einer der Rohraufnahmen (2) des Trägerblechs (1) von den Wandabschnitten (3, 4) formschlüssig gehalten ist.

8. Anordnung nach Anspruch 7, **dadurch gekennzeichnet, dass** das zumindest eine, vorzugsweise mäanderförmig geformte, Rohr (20) in zumindest zwei der Rohraufnahmen (2) des Trägerblechs (1) von den jeweiligen Wandabschnitten (3, 4) formschlüssig gehalten ist.

9. Anordnung nach Anspruch 7 oder 8, **dadurch gekennzeichnet, dass** die Anordnung eine Rückwand (30) aufweist, und das Trägerblech (1) im Bereich der zumindest zwei Rohraufnahmen (2), vorzugsweise an den vom umgebenden Bereich (10) des Trägerblechs (1) abstehenden Enden der Rohraufnahme (2), mit der Rückwand (30) verklebt oder anderweitig, vorzugsweise materialschlüssig, verbunden ist.

10. Verfahren zur Herstellung einer Anordnung nach einem der Ansprüche 7 bis 9, **dadurch gekennzeichnet, dass** in einem ersten Umformvorgang zur Herstellung der zumindest zwei eingeformten, rinnenförmigen und voneinander distanzierten Rohraufnahmen (2), Teile der jeweiligen zumindest zwei einander gegenüberliegenden Wandabschnitte (3, 4) in das Trägerblech (1) mittels Umformung des Trägerblechs (1) eingeformt werden, in weiterer Folge das jeweilige Rohr (20) zwischen diese Teile der Wandabschnitte (3, 4) eingebracht wird, und in einem zweiten Umformvorgang das Trägerblech (1) zur Fertigstellung der Wandabschnitte (3, 4) weiter verformt wird, wobei die Wandabschnitte (3, 4) am Ende des zweiten Umformvorgangs für den Bereich des maximalen Außendurchmessers des Rohres (20), ihren maximalen Abstand (21) voneinander aufweisen, wobei auf zumindest den zwei einander gegenüberliegenden Seiten des maximalen Abstands (21) die Wandabschnitte (3, 4) jeweils den geringeren Abstand (11, 12) als den maximalen Abstand (21) voneinander aufweisen.
